# EUROPÄISCHE PATENTSCHRIFT

(11) **EP 2 323 882 B1**
(45) Veröffentlichungstag und Bekanntmachung des Hinweises auf die Patenterteilung: **02.11.2011**
(21) Anmeldenummer: 09779630.4
(22) Anmeldetag: 04.06.2009
(51) Int. Cl.: B60T 17/18, B60T 17/22

(54) **VERFAHREN ZUR FUNKTIONSPRÜFUNG EINES BREMSSYSTEMS IN EINEM FAHRZEUG**
METHOD FOR THE FUNCTIONAL TESTING OF A BRAKE SYSTEM IN A VEHICLE
PROCÉDÉ D'ESSAI FONCTIONNEL D'UN SYSTÈME DE FREINAGE D'UN VÉHICULE

(30) Priorität: 04.08.2008 DE 102008040969
(43) Veröffentlichungstag der Anmeldung: 25.05.2011
(73) Patentinhaber: Robert Bosch GmbH, 70442 Stuttgart (DE)
(72) Erfinder: KINDER, Ralf, 71522 Backnang (DE)
(86) Internationale Anmeldenummer: PCT/EP2009/056845
(87) Internationale Veröffentlichungsnummer: WO 2010/015435

(56) Entgegenhaltungen:
- WO-A1-2004/016488
- DE-A1- 4 037 688
- JP-A- 11 286 271
- JP-A- 2007 182 171

## Beschreibung

Die Erfindung bezieht sich auf ein Verfahren zur Funktionsprüfung in einem Bremssystem in einem Fahrzeug nach dem Oberbegriff des Anspruches 1.

### Stand der Technik

Bekannt sind hydraulische Bremssysteme mit einem Hauptbremszylinder zur Erzeugung eines hydraulischen Bremsdruckes, wobei der Hauptbremszylinder über Hydraulikleitungen mit den Radbremszylindern verbunden ist. Bei einer Betätigung des Bremspedals wird ein erhöhter Druck im Hauptbremszylinder erzeugt und auf die Radbremszylinder übertragen.

Grundsätzlich besteht bei hydraulischen Bremssystemen das Problem, dass Luft im Bremskreis des Bremssystems auf Grund der höheren Kompressibilität zu einer Reduzierung des maximal erreichbaren Bremsdrucks führt. Übersteigt die Luftmenge im Bremskreis einen kritischen Wert, so sinkt der erreichbare Maximaldruck so weit ab, dass insbesondere im Falle eines Fehlers in der Bremsanlage kritische Fahrzustände auftreten können. In konventionellen hydraulischen Bremssystemen kann dies vom Fahrer über die Zunahme des Pedalwegs zur Einstellung einer gewünschten Bremswirkung bemerkt werden. Probleme entstehen jedoch bei einer Entkoppelung von Fahrerbetätigung und Radbremszylinder, wobei in diesem Fall das Pedalwegverhalten mithilfe eines Pedalwegsimulators erzeugt wird, bei dem dem Hauptbremszylinder ein Ausgleichsbehälter zugeordnet ist, in den bei regulärer Betätigung des Bremspedals das Hydraulikfluid verdrängt wird. Der vom Fahrer ausgeübte Bremspedaldruck wird über eine Sensorik gemessen und der Steuerung einer elektrischen Pumpe zu Grunde gelegt, über die ein der Pedalbetätigung entsprechender Bremsdruck eingestellt wird. Ein derartiges Bremssystem wird beispielsweise in der DE 35 26 556 A1 beschrieben.

Auf Grund der Entkopplung von Fahrer und Radbremszylinder kann eine Akkumulierung von Luft im Bremskreis vom Fahrer nicht mehr anhand der Veränderung der Pedalcharakteristik erkannt werden. Der Fahrer hat somit keine Gelegenheit mehr, die graduelle Verschlechterung im Bremskreis zu erkennen, bevor sie ein kritisches Ausmaß erreicht.

### Offenbarung der Erfindung

Der Erfindung liegt die Aufgabe zu Grunde, ein Nachlassen der Bremswirkung in einem hydraulischen Bremssystem frühzeitig anzuzeigen. Dieses soll insbesondere auch für Bremssysteme gelten, bei denen die Fahrerbetätigung des Bremspedals vom Radbremszylinder hydraulisch entkoppelt ist.

Diese Aufgabe wird erfindungsgemäß mit den Merkmalen des Anspruches 1 gelöst. Die Unteransprüche geben zweckmäßige Weiterbildungen an.

Dem erfindungsgemäßen Verfahren zur Funktionsprüfung eines hydraulischen Bremssystems in einem Fahrzeug liegt die Ausgangssituation zu Grunde, dass ein unzulässig hoher Gasanteil in einem hydraulischen Bremskreis des Bremssystems detektiert werden soll. Das Bremssystem umfasst in bekannter Weise eine Bremsdruckerzeugungseinheit, eine Radbremseinheit, bei der es sich üblicherweise um einen Radbremszylinder handelt, eine Speicherkammer für hydraulisches Bremsfluid sowie einen Drucksensor zur Messung des aktuell anliegenden Bremsdrucks in jedem Bremskreis des Bremssystem. Das erfindungsgemäße Verfahren wird in der Weise durchgeführt, dass in einem ersten Schritt zunächst das Bremsfluid von der Bremsdruckerzeugungseinheit in die Speicherkammer verschoben wird. Anschließend wird in einem zweiten Schritt der aktuelle Bremsdruck im Bremskreis gemessen und mit einem Bremsdruck-Referenzwert verglichen, wobei im Falle des Unterschreitens des Bremsdruck-Referenzwerts ein Warnsignal erzeugt wird.

In dem Bremskreis, in dem eine zusätzliche kritische Luftmenge enthalten ist, wird der erzielbare maximale Bremsdruck auf Grund der Kompressibilität des Luftvolumens erheblich abgesenkt, wobei sich in positiver Weise die Tatsache bemerkbar macht, dass die Druck-Volumen-Kurve eines Bremssystems mit zunehmendem Druck flacher verläuft, so dass eine Zunahme der Luftmenge sich stark auf den erzielbaren Maximaldruck auswirkt. Die Absenkung des Maximaldrucks in dem betreffenden Bremskreis kann über einen Vergleich mit dem Bremsdruck-Referenzwert festgestellt werden. Sofern der Referenzwert um ein Mindestmaß unterschritten wird, kann in verschiedener Form ein Warnsignal erzeugt und ggf. dem Fahrer zur Anzeige gebracht werden, und zwar in an sich bekannter Weise auf optischem, akustischem oder haptischem Wege. Gegebenenfalls reicht es auch aus, das Warnsignal in einem Regel- bzw. Steuergerät abzuspeichern.

Als Bremsdruck-Referenzwert wird vorzugsweise der bei gleicher Ausgangssituation erreichbare maximale Bremsdruck in einem zweiten Bremskreis des Bremssystems herangezogen. Diese Vorgehensweise hat den Vorteil, dass kein absoluter, sondern ein relativer Bremsdruck-Referenzwert zur Verfügung steht, der zum Vergleich mit dem zu überprüfenden Bremskreis zur Verfügung steht. Beide Bremskreise werden grundsätzlich mit dem gleichen Druck der Bremsdruckerzeugungseinheit beaufschlagt, so dass Unterschiede in den Bremsdrücken der beiden Bremskreise unmittelbar auf ein Nachlassen der Funktion eines Bremskreises schließen lassen.

Grundsätzlich ist es aber auch möglich, den Bremsdruck-Referenzwert auf andere Weise zu gewinnen. In Betracht kommen hierbei sowohl Verfahren, bei denen der Bremsdruck-Referenzwert aktuell aus Zustands- bzw. Betriebsgrößen des Fahrzeuges bestimmt wird als auch die Vorgabe eines Bremsdruck-Referenzwertes als Absolutwert.

Gemäß einer weiteren bevorzugten Ausführung ist vorgesehen, dass die Funktionsprüfung erst durchgeführt wird, nachdem das Bremsfluid des ersten, zu untersuchenden Bremskreises vollständig aus der Bremsdruckerzeugungseinheit in die zugeordnete Speicherkammer evakuiert worden ist. Das Bremsfluid ist in diesem Zustand aus dem zu untersuchenden Bremskreis verschwunden, das Bremssystem verhält sich so, als wäre eine zusätzliche Luftmenge entsprechend dem Speicherkammervolumen im Bremskreis vorhanden. Aufgrund des bereits erwähnten Eigenschaft der Druck-Volumenkennlinie wird hierdurch wird eine erhebliche Absenkung des zu erzielenden Maximaldrucks erreicht, so dass bereits verhältnismäßig geringe Betätigungen der Bremsdruckerzeugungseinheit über den Fahrer ausreichen, um eine Divergenz zwischen dem Bremsdruck des zu untersuchenden Bremskreises und dem Bremsdruck-Referenzwert feststellen zu können. Grundsätzlich ist es aber auch möglich, lediglich eine Teilevakuierung durchzuführen und anschließend den Druck zu messen und zu vergleichen.

Gemäß einer weiteren vorteilhaften Ausführung wird die Funktionsprüfung nur für den Fall durchgeführt, dass in der Speicherkammer, in die das Bremsfluid evakuiert worden ist, ein Mindestdruck herrscht. Hierdurch soll sichergestellt werden, dass eventuell in die Speicherkammer verschobene Luftblasen weitgehend komprimiert werden.

Die Funktionsprüfung wird vorzugsweise aus Sicherheitsgründen im Stillstand des Fahrzeugs durchgeführt, da über die Funktionsprüfung eine zumindest teilweise Reduzierung der Bremskraft erfolgt und kritische Fahrzustände während der Funktionsprüfung vermieden werden sollen. Als weitere Funktionalität kann es zweckmäßig sein, eine bereits laufende Funktionsprüfung abzubrechen, sobald sich das Fahrzeug in Bewegung setzt, beispielsweise infolge eines Wegrollens des Fahrzeugs an einer Steigung. Bei der Überwachung, ob das Fahrzeug sich im Stillstand befindet oder sich in Bewegung setzt, kann auf Standardkomponenten zurückgegriffen werden, die im Fahrzeug verbaut sind und mit denen eine Bewegung des Fahrzeuges festgestellt werden kann.

Gemäß noch einer weiteren vorteilhaften Ausführung wird die Volumenverschiebung von der Bremsdruckerzeugungseinheit in die Speicherkammer nicht in einem Schritt, sondern in mehreren Schritten bzw. graduell durchgeführt. Dies erfolgt insbesondere ebenfalls unter Sicherheitsaspekten, da bei der schrittweisen Evakuierung noch ein Mindestdruck in dem betreffenden Bremskreis sichergestellt ist.

Das erfindungsgemäße Verfahren ist grundsätzlich zur Durchführung in hydraulischen oder elektrohydraulischen Bremssystemen geeignet. Vorzugsweise wird das Verfahren in Bremssystemen durchgeführt, bei denen eine Entkopplung des Fahrers von der Bremse vorliegt, beispielsweise über einen Pedalwegsimulator.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines hydraulischen Bremssystems in einem Kraftfahrzeug, bestehend aus zwei über einen Hauptbremszylinder zu betätigende Bremskreise, wobei jedem Bremskreis eine zusätzliche Speicherkammer zugeordnet ist, dargestellt im normalen Betriebszustand,

- Fig. 2: eine Fig. 1 entsprechende Darstellung, jedoch während einer Funktionsprüfung zur Überprüfung des Bremsdrucks im ersten Bremskreis, bei der die Speicherkammer des ersten Bremskreises mit Hydraulikfluid gefüllt ist,
- Fig. 3: das Bremssystem in regulären Betriebszustand, jedoch im Vergleich zu Fig. 1 mit einem zusätzlichen Luftvolumen im ersten Bremskreis,
- Fig. 4: das Bremssystem mit zusätzlichem Luftvolumen im ersten Bremskreis während der Funktionsüberprüfung,
- Fig. 5: ein Schaubild mit dem Druckverlauf in Abhängigkeit von der Zeit bei hinreichend starker Bremsbetätigung, dargestellt für einen Bremskreis mit und einen Bremskreis ohne zusätzliches Luftvolumen,
- Fig. 6: ein Schaubild mit dem Verlauf des Volumens in Abhängigkeit vom Druck,
- Fig. 7: ein Schaubild mit den Druckverläufen im ersten und zweiten Bremskreis während einer Funktionsüberprüfung im ersten Bremskreis für den Fall, dass im ersten Bremskreis sich ein zusätzliches Luftvolumen befindet,
- Fig. 8: ein Ablaufdiagramm mit den verschiedenen Schritten bei der Funktionsprüfung des Bremssystems.

In den Figuren sind gleiche Bauteile mit gleichen Bezugszeichen versehen.

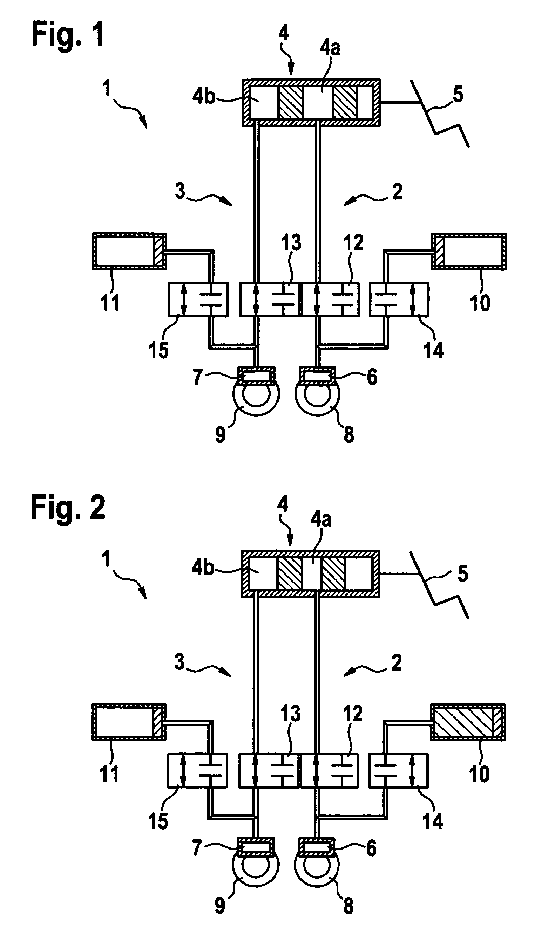

Das in Fig. 1 dargestellte hydraulische Bremssystem 1 weist zwei Bremskreise 2 und 3 auf, die von einem gemeinsamen Hauptbremszylinder 4 mit Druck beaufschlagt werden, wobei der Hauptbremszylinder 4 über ein Bremspedal 5 vom Fahrer zu betätigen ist. Der erste Bremskreis 1 weist einen Radbremszylinder 6 an einem Rad 8 auf, der zweite Bremskreis 2 ist entsprechend aufgebaut mit einem Radbremszylinder 7 an einem weiteren Rad 9. Zudem ist jedem Bremskreis 2, 3 jeweils eine Speicherkammer 10 bzw. 11 zugeordnet, die über ein schaltbares Ventil 14 bzw. 15 an den jeweiligen Bremskreis 2 bzw. 3 angeschlossen ist. Des Weiteren sind Hauptschaltventile 12 und 13 im Verbindungsweg zwischen dem Hauptbremszylinder 4 und den Radbremszylindern 6 bzw. 7 in jedem Bremskreis 2 bzw. 3 angeordnet. Bei den Ventilen 12, 13, 14 und 15 kann es sich um Regel- bzw. Proportionalventile oder um Schaltventile handeln.

Bei einer regulären Betätigung im Normalzustand des Bremssystems sind die Schaltventile 14 und 15 zu den Speicherkammern 10 bzw. 11 in jedem Bremskreis 2 bzw. 3 geschlossen. Zugleich sind die Schaltventile 12 und 13 zu den Radbremszylindern 6 und 7 geöffnet, so dass das Bremsfluid in Zylinderkammern 4a und 4b im Hauptbremszylinder 4 bei Betätigung über das Bremspedal 5 mit einem Bremsdruck p₁ bzw. p₂ beaufschlagt werden, der den Radbremszylindern 6 bzw. 7 zugeführt wird. Im Normalfall ist der Druck p₁ im ersten Bremskreis 2 identisch mit dem Druck p₂ im zweiten Bremskreis 3.

In Fig. 2 ist das Bremssystem 1 während einer Funktionsprüfung des ersten Bremskreises 2 dargestellt. Während der Funktionsprüfung ist die dem ersten Bremskreis 2 zugeordnete Speicherkammer 10 komplett mit Bremsfluid gefüllt, so dass sich ein entsprechend verringertes Zylindervolumen 4a im Hauptbremszylinder 4 des ersten Bremskreises 2 einstellt. Allerdings verbleibt ein ausreichend großes Restvolumen im Zylindervolumen 4a des Hauptbremszylinders 4, das mit Bremsfluid gefüllt ist, um den gewünschten Druck aufrechtzuerhalten, so dass trotz einer Teilevakuierung des Bremsfluids in die Speicherkammer 10 der Bremsdruck p₁ im ersten Bremskreis 2 nach wie vor identisch ist mit dem Bremsdruck p₂ im zweiten Bremskreis 3. Dieser Zustand gilt, so lange im ersten Bremskreis 2 sich kein oder nur ein geringes Luftvolumen befindet.

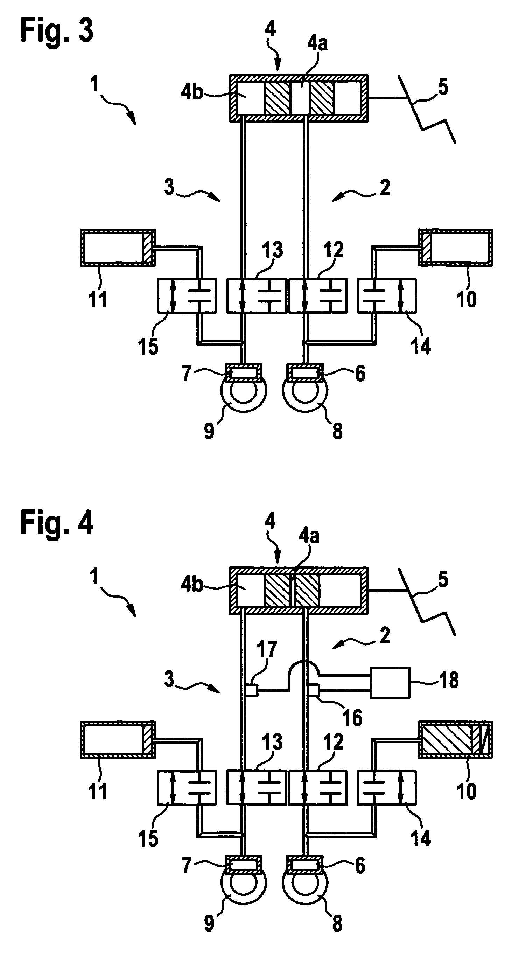

Die Figuren 3 und 4 entsprechen den Figuren 1 und 2, jedoch mit einem zusätzlichen Luftvolumen im ersten Bremskreis 2. Fig. 3 zeigt die Situation im normalen Betriebs- bzw. Bremszustand, Fig. 4 während der Funktionsprüfung.

Wie Fig. 3 zu entnehmen, ist das Zylindervolumen 4a im Hauptbremszylinder 4, welches dem ersten Bremskreis 2 zugeordnet ist, bei Betätigung des Bremspedals 5 auf Grund der Kompressibilität des Luftvolumens im Vergleich zum Zustand aus Fig. 1 verringert. Wird nun die Funktionsprüfung gemäß Fig. 4 durchgeführt, so wird das Bremsfluid, welches sich im ersten Bremskreis 2 befindet, in die Speicherkammer 10 des ersten Bremskreises evakuiert. Das in der Menge verringerte Bremsfluid wird vollständig in der Speicherkammer 10 aufgenommen, so dass im Zylindervolumen 4a des Hauptbremszylinders 4 kein Bremsfluid mehr verbleibt. Über das Bremspedal 5 ist daraufhin keine weitere Druckerhöhung im ersten Bremskreis 2 mehr möglich , wohingegen im zweiten Zylindervolumen 4b des zweiten Bremskreises 3 ausreichend Bremsfluid vorhanden ist, das mit einem entsprechenden Druck p₂ beaufschlagt wird. Der im ersten Bremskreis 2 zu erzielende Druck p₁ ist geringer als der Druck p₂ im zweiten Bremskreis 3, was über Drucksensoren 16 bzw. 17 in den Bremskreisen 2 bzw. 3 detektiert werden kann. In einem gemeinsamen Regel- bzw. Steuergerät 18 werden die gemessenen Bremsdrücke p₁ und p₂ miteinander verglichen, wobei für den Fall einer ein zulässiges Maß überschreitenden Abweichung ein Fehlersignal erzeugt wird.

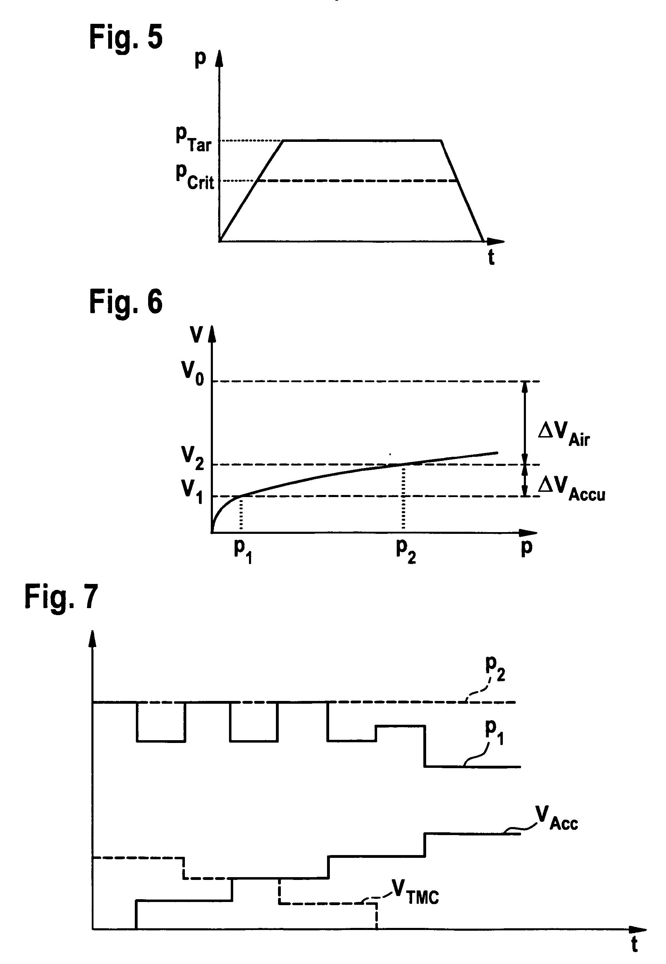

Wie dem Druck-Zeit-Diagramm gemäß Fig. 5 zu entnehmen, wird bei einer hinreichend starken Bremsbetätigung ein Druckniveau p_{Tar} erreicht, wohingegen für den Fall, dass sich Luft im Bremskreis befindet, lediglich ein geringerer Maximaldruck p_{Crit} erreicht werden kann, der unter dem Druckniveau p_{Tar} liegt.

Aus dem Volumen-Druck-Diagramm nach Fig. 6 geht hervor, dass der maximal erreichbare Druck von p₂ auf den Wert p₁ abgesenkt wird, wenn sich Luft Δ V_{Air} im Bremskreis befindet und das Bremsfluidvolumen Δ V_{Accu} in die Speicherkammer verschoben wird.

In Fig. 7 sind zum einen zwei Druckverläufe p₁ und p₂ dargestellt, die die Bremsdrücke im ersten bzw. zweiten Bremskreis darstellen. Zum andern zeigt Fig. 7 den zugehörigen Volumenverlauf für das Bremsfluidvolumen V_{TMC} im ersten Bremskreis und das zugehörige Speicherkammervolumen V_{Acc} ebenfalls im ersten Bremskreis bei einer Volumenverschiebung in die Speicherkammer. Mit zunehmender Volumenverschiebung in die Speicherkammer nimmt das Volumen V_{TMC} ab und das Volumen V_{Acc} in der Speicherkammer entsprechend zu. Für den Fall, dass sich Luft im ersten Bremskreis befindet, liegt der maximal erreichbare Druck p₁ im ersten Bremskreis nach der Verschiebung des Bremsfluids in die Speicherkammer deutlich unterhalb des maximalen Bremsdruckes p₂ aus dem zweiten Bremskreis.

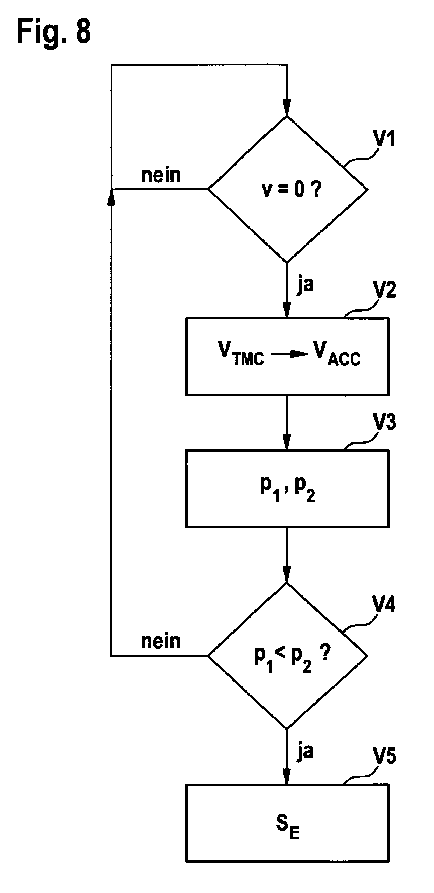

In Fig. 8 ist ein Ablaufdiagram für die Durchführung der Funktionsprüfung im ersten Bremskreis dargestellt. Zunächst wird gemäß Verfahrensschritt V1 abgefragt, ob sich das Fahrzeug im Stillstand befindet. Hierzu wird die Fahrzeuggeschwindigkeit v abgefragt, wobei die Funktionsprüfung nur im Stillstand durchgeführt wird und dementsprechend der nein-Verzweigung folgend zum Beginn des Verfahrens zurückgekehrt wird, falls das Fahrzeug nicht steht. Andernfalls wird der ja-Verzweigung zum nächsten Verfahrensschritt V2 fortgefahren und es wird die Funktionsprüfung gestartet.

Gemäß Verfahrensschritt V2 erfolgt eine Volumenverschiebung des Bremsfluids, welches das Volumen V_{TMC} aufweist, in die Speicherkammer des ersten Bremskreises, die das Volumen V_{Acc} besitzt. Nach vollständiger Evakuierung in die Speicherkammer wird gemäß Verfahrensschritt V3 mithilfe der Drucksensoren der Druck p₁ im ersten Bremskreis sowie der Druck p₂ im zweiten Bremskreis nach einer Betätigung des Bremspedals durch den Fahrer bestimmt. Im Verfahrensschritt V4 erfolgt die Abfrage, ob der Druck p₁ des ersten Bremskreises unterhalb des Drucks p₂ des zweiten Bremskreises liegt, der als Referenz-Bremsdruck herangezogen wird. Ist dies nicht der Fall, befindet sich keine Luft bzw. nur Luft in zulässiger Menge im ersten Bremskreis und es wird der nein-Verzweigung folgend wieder zum Beginn des Verfahrens zum Schritt V1 zurückgekehrt. Liegt jedoch der Bremsdruck p₁ des ersten Bremskreises unter dem Bremsdruck p₂ des zweiten Bremskreises, wird der ja-Verzweigung folgend zum letzten Verfahrensschritt V5 fortgefahren und ein Fehler- bzw. Warnsignal S_{E} ausgegeben.

## Patentansprüche

1. Verfahren zur Funktionsprüfung eines hydraulischen Bremssystems in einem Fahrzeug, wobei das Bremssystem (1) eine Bremsdruckerzeugungseinheit (4), eine Radbremseinheit (8, 9), eine Speicherkammer (10, 11) für Bremsfluid und mindestens einen Drucksensor (16, 17) zur Messung des Bremsdrucks (p₁, p₂) aufweist, **gekennzeichnet durch** folgende Verfahrensschritte:
- Verschieben des Bremsfluids von der einem Bremskreis (2) des Bremssystems (1) zugeordneten Bremsdruckerzeugungseinheit (4) in die Speicherkammer (10),
- Messen des aktuellen Bremsdrucks (p₁) im Bremskreis (2) und Vergleichen mit einem Bremsdruck-Referenzwert (p₂), wobei im Falle des Unterschreitens des Bremsdruck-Referenzwerts (p₂) ein Warnsignal (S_{E}) erzeugt wird.

2. Verfahren nach Anspruch 1, **dadurch gekennzeichnet, dass** der Bremsdruck-Referenzwert (p₂) aus einem zweiten Bremskreis (3) des Bremssystems (1) bestimmt wird.

3. Verfahren nach Anspruch 1 oder 2, **dadurch gekennzeichnet, dass** die Funktionsprüfung durchgeführt wird, nachdem das Bremsfluid des ersten Bremskreises (2) vollständig aus der Bremsdruckerzeugungseinheit (4) evakuiert worden ist.

4. Verfahren nach einem der Ansprüche 1 bis 3, **dadurch gekennzeichnet, dass** die Funktionsprüfung nur durchgeführt wird, wenn in der Speicherkammer (10) ein Mindestdruck erreicht wird.

5. Verfahren nach einem der Ansprüche 1 bis 4, **dadurch gekennzeichnet, dass** die Funktionsprüfung im Stillstand des Fahrzeugs durchgeführt wird.

6. Verfahren nach einem der Ansprüche 1 bis 5, **dadurch gekennzeichnet, dass** eine bereits laufende Funktionsprüfung abgebrochen wird, wenn das Fahrzeug beginnt, sich zu bewegen.

7. Verfahren nach einem der Ansprüche 1 bis 6, **dadurch gekennzeichnet, dass** die Volumenverschiebung des Bremsfluids von der Bremsdruckerzeugungseinheit (4) in die Speicherkammer (10) schrittweise durchgeführt wird,

8. Verfahren nach Anspruch 7, **dadurch gekennzeichnet, dass** bei jedem Schritt der Evakuierung der aktuelle Bremsdruck (p₁) mit dem Bremsdruck-Referenzwert (p₂) verglichen wird.

9. Regel- bzw. Steuergerät zur Funktionsprüfung eines hydraulischen Bremssystems in einem Fahrzeug und zur Durchführung des Verfahrens nach einen der Ansprüche 1 bis 8.

10. Bremssystem in einem Fahrzeug mit einem Regel- bzw. Steuergerät (18) nach Anspruch 9.

## Claims

1. Method for functional testing of a hydraulic brake system in a vehicle, the brake system (1) having a brake-pressure generating unit (4), a wheel brake unit (8, 9), an accumulator chamber (10, 11) for brake fluid and at least one pressure sensor (16, 17) for measuring the brake pressure (p₁, p₂), **characterized by** the following method steps:
- displacement of the brake fluid from the brake-pressure generating unit (4) which is assigned to a brake circuit (2) of the brake system (1) into the accumulator chamber (10),
- measurement of the current brake pressure (p₁) in the brake circuit (2) and comparison with a brake-pressure reference value (p₂), a warning signal (S_{E}) being generated in the case of the brake-pressure reference value (p₂) being undershot.

2. Method according to Claim 1, **characterized in that** the brake-pressure reference value (p₂) is determined from a second brake circuit (3) of the brake system (1) .

3. Method according to Claim 1 or 2, **characterized in that** the functional test is carried out after the brake fluid of the first brake circuit (2) has been evacuated completely from the brake-pressure generating unit (4).

4. Method according to one of Claims 1 to 3, **characterized in that** the functional test is carried out only if a minimum pressure is reached in the accumulator chamber (10).

5. Method according to one of Claims 1 to 4, **characterized in that** the functional test is carried out when the vehicle is at a standstill.

6. Method according to one of Claims 1 to 5, **characterized in that** a functional test which is already running is aborted if the vehicle starts to move.

7. Method according to one of Claims 1 to 6, **characterized in that** the volumetric displacement of the brake fluid from the brake-pressure generating unit (4) into the accumulator chamber (10) is carried out in steps.

8. Method according to Claim 7, **characterized in that**, during every step of the evacuation, the current brake pressure (p₁) is compared with the brake-pressure reference value (p₂) .

9. Regulating and control unit for functional testing of a hydraulic brake system in a vehicle and for carrying out the method according to one of Claims 1 to 8.

10. Brake system in a vehicle having a regulating and control unit (18) according to Claim 9.

## Revendications

1. Procédé d'essai fonctionnel d'un système de freinage hydraulique dans un véhicule, dans lequel le système de freinage (1) présente une unité de génération de pression de freinage (4), une unité de frein de roue (8, 9), une chambre d'accumulation (10, 11) pour le fluide de frein et au moins un capteur de pression (16, 17) pour mesurer la pression de freinage (p₁, p₂) , **caractérisé par** les étapes de procédé suivantes :
- déplacement du fluide de frein depuis l'unité de génération de pression de freinage (4) associe à un circuit de freinage (2) du système de freinage (1) dans la chambre d'accumulation (10),
- mesure de la pression de freinage actuelle (p₁) dans le circuit de freinage (2) et comparaison avec une valeur de référence de pression de freinage (p₂), un signal d'avertissement (S_{E}) étant produit en cas de passage en dessous de la valeur de référence de pression de freinage (p₂).

2. Procédé selon la revendication 1, **caractérisé en ce que** la valeur de référence de pression de freinage (p₂) est déterminée à partir d'un deuxième circuit de freinage (3) du système de freinage (1).

3. Procédé selon la revendication 1 ou 2, **caractérisé en ce que** l'essai fonctionnel est effectué après que le fluide de frein du premier circuit de freinage (2) a été complètement évacué de l'unité de génération de pression de freinage (4).

4. Procédé selon l'une quelconque des revendications 1 à 3, **caractérisé en ce que** l'essai fonctionnel n'est effectué que lorsqu'une pression minimale est atteinte dans la chambre d'accumulation (10).

5. Procédé selon l'une quelconque des revendications 1 à 4, **caractérisé en ce que** l'essai fonctionnel est effectué à l'arrêt du véhicule.

6. Procédé selon l'une quelconque des revendications 1 à 5, **caractérisé en ce qu'**un essai fonctionnel déjà en cours est interrompu lorsque le véhicule commence à se déplacer.

7. Procédé selon l'une quelconque des revendications 1 à 6, **caractérisé en ce que** le déplacement de volume du fluide de frein depuis l'unité de génération de pression de freinage (4) dans la chambre d'accumulation (10) s'effectue par étapes.

8. Procédé selon la revendication 7, **caractérisé en ce qu'**à chaque étape de l'évacuation, la pression de freinage actuelle (p₁) est comparée avec la valeur de référence de pression de freinage (p₂).

9. Appareil de régulation ou de commande pour l'essai fonctionnel d'un système de freinage hydraulique dans un véhicule et pour mettre en oeuvre le procédé selon l'une quelconque des revendications 1 à 8.

10. Système de freinage dans un véhicule avec un appareil de régulation ou de commande (18) selon la revendication 9.
